**Europäisches Patentamt**

**European Patent Office**

**Office européen des brevets**

(19)

(11) Veröffentlichungsnummer: **0 153 625**
**B1**

(12) # EUROPÄISCHE PATENTSCHRIFT

(45) Veröffentlichungstag der Patentschrift:
**10.05.89**

(21) Anmeldenummer: **85101260.9**

(22) Anmeldetag: **07.02.85**

(51) Int. Cl.⁴: **B 25 J 18/00**, B 25 J 1/12,
B 25 J 1/04

(54) **Manipulator.**

(30) Priorität: **27.02.84 US 583892**

(43) Veröffentlichungstag der Anmeldung:
**04.09.85 Patentblatt 85/36**

(45) Bekanntmachung des Hinweises auf die Patenterteilung:
**10.05.89 Patentblatt 89/19**

(84) Benannte Vertragsstaaten:
**DE FR GB IT**

(56) Entgegenhaltungen:
**DE-A-2 841 183**
**DE-C-1 431 892**
**FR-A-2 488 543**
**FR-A-2 490 134**
**FR-A-2 545 030**
**GB-A-2 091 836**

(73) Patentinhaber: **Thyssen Industrie AG, Am Thyssenhaus 1, D-4300 Essen 1 (DE)**

(72) Erfinder: **Doege, Joachim, Dipl.- Ing., Kettinger Strasse 84, D-1000 Berlin 49 (DE)**
Erfinder: **Paschke, Hanns- Dieter, Dipl.- Ing., Müllenhoffstrasse 13, D-1000 Berlin (DE)**
Erfinder: **Tran, Ke Dat, Ollenhauerstrasse 32, D-1000 Berlin 51 (DE)**

(74) Vertreter: **Eberhard, Friedrich, Dr., Am Thyssenhaus 1, D-4300 Essen 1 (DE)**

## Beschreibung

Die Erfindung betrifft einen Manipulator nach dem Pantographenprinzip, mit zwei zueinander parallelen Holmen sowie einem Lastarm und einem dazu parallelen Lenkhebel, die gelenkig zu einem Parallelogrammgestänge zusammengeschlossen sind, wobei ein Holm schwenkbar an einem Halteteil eines um eine vertikale Achse drehbaren Ständers gelagert ist und mindestens ein Hubzylinder mit einer durch ihn verstellbaren Fahrbahn verbunden ist, auf der das Parallelogrammgestänge mit einer Rolle abgestützt ist.

Manipulatoren dienen zum Bewegen und zum Halten von Lasten innerhalb eines von ihren Abmessungen abhängigen Arbeitsraumes und gegebenen falls, bei Vorhandensein einer Parallelführung, auch zum Unterfahren von z. B. Regalen.

Bei einem bekannten Manipulator der eingangs beschriebenen Gattung (DE-PS-1 431 892) ist die Säule unter einer Decke oder einem Träger drehbar aufgehängt. Mit einem an der Säule abgestützten Hubzylinder wird ein Lenkhebel bewegt, der mit einer Rollenführung aus beidseits an einem der Holme angeordneten Rollen an diesen angreift und dadurch das Parallelogrammgestänge steuert. Aufbau und Montage der Rollenführungen sowie des Manipulators insgesamt sind ebenso wie die Wartung aufwendig. Ein wesentlicher Nachteil eines solchen Manipulators ist jedoch seine Sperrigkeit, die sich insbesondere auf Transport und Montage ungünstig auswirkt.

Aufgabe der Erfindung ist es deshalb, einen Manipulator der eingangs beschriebenen Gattung so zu verbessern, daß er sich einfacher transportieren und montieren läßt, wobei auch die Leichtgängigkeit verbessert werden soll.

Diese Aufgabe wird dadurch gelöst, daß das Halteteil lösbar am Ständer angeordnet ist und daß die nur von oben auf der verstellbaren Fahrbahn abgestützte Rolle an einem Lenkhebel des Parallelogrammgestänges drehbar gelagert ist.

Bei diesem Manipulator ist das Parallelogrammgestänge praktisch nur noch über eine Lagerstelle mit dem Halteteil verbunden. Es ist außerdem lediglich über die Rolle an der Fahrbahn, die zum Ständer gehört, abgestützt. Durch Lösen des Halteteils vom Ständer kann das gesamte Gestänge abgenommen und gegebenenfalls auch durch ein anderes Gestänge ersetzt werden, dessen Abmessungen den jeweiligen Bedürfnissen angepaßt sind. Dennoch kann mit Hilfe des Hubzylinders am Ständer die Vertikalbewegung des Anschlußpunktes der Last am Lastarm gesteuert werden. Bei einer Horizontalbewegung des Anschlußpunktes der Last am Lastarm findet ein Verfahren der Rolle des Lenkhebels auf der Fahrbahn statt.

Damit der Lastarm bzw. die daran hängende Last in einem möglichst großen Raumbereich bewegt werden kann, sollte das Halteteil bzw. die Lagerung für den Holm im Abstand über der von der Fahrbahn gebildeten Ebene angeordnet sein und sollte der Lenkhebel sich über den Holm hinaus erstrecken sowie an seinem freien Ende die Rolle tragen. Dann kann nämlich die Last mit dem Parallelogrammgestänge abgesenkt werden, ohne daß das Parallelogrammgestänge, insbesondere einer der Holme, die Fahrbahn berührt.

Dazu trägt auch bei, wenn der Lenkhebel an seinem der Fahrbahn abgewandten Ende eine Lagerstelle für den anderen Holm sowie zwischen dieser Lagerstelle und der Rolle eine Lagerstelle für den am Halteteil gelagerten Holm aufweist. Anders ausgedrückt, befindet sich der am Halteteil gelagerte Holm auf der der Fahrbahn zugewandten Seite des Parallelogrammgestänges.

Damit die Fahrbahn, auf der sich die am Lenkhebel befindliche Rolle mit mehr oder weniger großer Kraft abstützt, stets eine vorbestimmte Orientierung beibehält, sollte die insbesondere horizontal ausgerichtete Fahrbahn an eine insbesondere vertikal in Verstellrichtung des Hubzylinders am Ständer verschiebliche Geräteführung angeschlossen sein. Die Geräteführung dient damit der Parallelführung der mit dem Hubzylinder auf- und abbewegbaren Fahrbahn.

Wenn das Verhältnis des Abstands zwischen der Lagerstelle des Holms am Halteteil und der Lagerstelle des Holms am Lenkhebel zum Abstand zwischen der Lagerstelle des Holms am Halteteil und der Lagerstelle des Holms am Lastarm gleich ist dem Verhältnis des Abstands zwischen der Lagerstelle des Holms am Lenkhebel und der Rolle am Lenkhebel zum Abstand zwischen der Lagerstelle des Holms am Lastarm und dem Anschlußpunkt der Last am Lastarm, dann gehen der Anschlußpunkt der Last am Lastarm und die Rolle am Lenkhebel immer in dieselbe Richtung bei einer Bewegung.

Die zum Bewegen der Last erforderliche Kraft kann reduziert werden und damit kann die Leichtgängigkeit des Manipulators verbessert werden durch einen an dem Halteteil gelagerten Holm angreifenden Gewichtsausgleich. Dazu kann der Holm über das Halteteil hinaus verlängert sein und an seiner Verlängerung ein Ausgleichsgewicht tragen. Wenn das Ausgleichsgewicht in Längsrichtung des Holms verstellbar ist, besteht die Möglichkeit, den Gewichtsausgleich dem jeweiligen Parallelogrammgestänge anzupassen.

Bei einer anderen Ausführung kann zwischen Holm und Ständer ein Ausgleichszylinder vorgesehen sein, der an beiden Bauteilen gelenkig gelagert ist und der nach Maßgabe der gewünschten Entlastung gesteuert wird.

Soll der Manipulator auch zum Unterfahren von z. B. Regalen eingerichtet sein, dann kann er auch mit einer Parallelführung für ein an den Lastarm angeschlossenes Lastaufnahmemittel ausgerüstet sein, wobei die Parallelführung aus einer zum Holm parallelen Stange, die einerseits am Halteteil und andererseits an einer die Lagerstelle des Holmsaufnehmenden Konsole gelagert ist, sowie aus einer zum Lastarm parallelen Stange, die einerseits an der Konsole und andererseits am Lastaufnahmemittel gelagert ist, besteht.

Im folgenden werden in der Zeichnung dargestellte Ausführungsbeispiele der Erfindung erläutert; es zeigen:

Fig. 1    in schematischer Darstellung eine Ansicht eines Manipulators,
Fig. 2    eine andere Ausführung des Gegenstandes nach Figur 1,

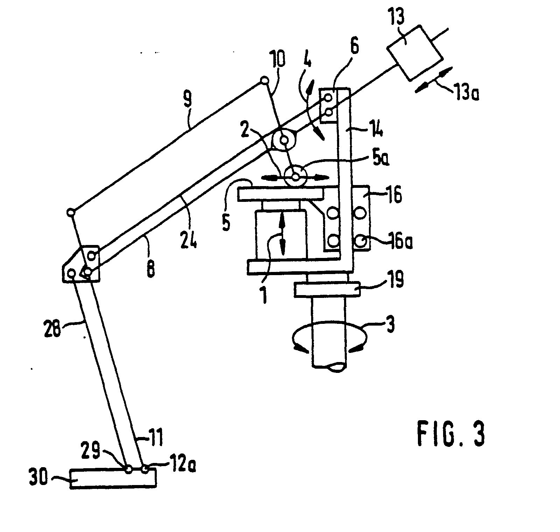

Fig. 3    eine weitere Ausführung des Gegenstandes nach Figur 1.

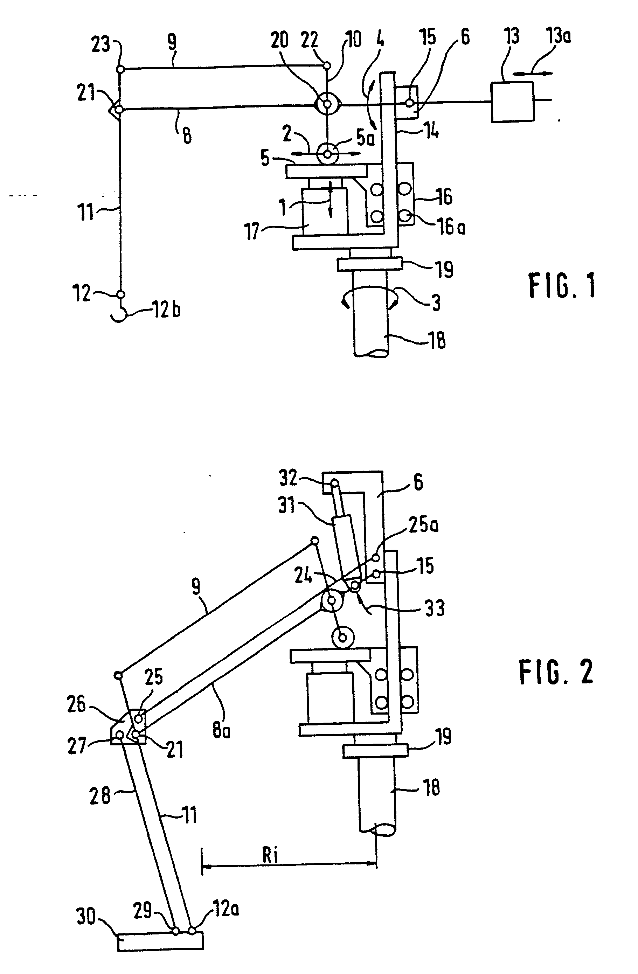

In der Figur 1 ist der Ständer 14 mit der Lagerung 19 auf der Säule 18 drehbar in Pfeilrichtung 3 um die Vertikalachse gelagert. Auf dem Ständer 14 ist die Geräteführung 16 mit den Rollen 16a geführt und kann von dem Kolben des Hubzylinders 17 in Pfeilrichtung 1 auf- und abbewegt werden. Ein Teil der Geräteführung 16 ist die Fahrbahn 5, auf der die Rolle 5a in Pfeilrichtung 2 bewegbar ist. Die Rolle 5a ist am Lenkhebel 10 drehbar gelagert. An dem Ständer 14 ist das Halteteil 6 mit der Lagerung 15 des Holms 8 lösbar befestigt. Am Holm 8 ist bei Lagerstelle 20 der Lenkhebel 10 und bei Lagerstelle 21 der Lastarm 11 drehbar gelagert. Der Parallelholm 9 liegt auf der anderen Seite des Holms 8 als die Rolle 5a. Der Parallelholm 9 ist an der Lagerstelle 22 mit dem Lenkhebel 10 und an der Lagerstelle 23 mit dem Lastarm 11 drehbar verbunden. Das Gewicht 13 ist auf dem Oberholm 8 in Pfeilrichtung 13a verschiebbar und arretierbar. Das Verhältnis der Entfernungen der Lagermitten von 15 bis 20 zu 15 bis 21 ist gleich dem Verhältnis von 20 bis 5a zu 21 bis 12. Dieses Verhältnis wird mit "i" bezeichnet. Die Lagermitten von 12, 5a und 15 liegen auf einer Geraden. Der Lasthaken 12b ist mit dem Lastarm 11 bei 12 gelenkig verbunden.

In der Figur 2 besteht die Parallelführung aus der Stange 24, der Konsole 26 und der Stange 28, die miteinander gelenkig verbunden sind. Das eine Ende der Parallelführung ist an dem Halteteil 6 bei 25a drehbar gelagert, das andere Ende bei 29 an der Verlängerung 30. Die Entfernungen der Lagermitten von 25a bis 25 und 15 bis 21 sind gleich lang. Die Entfernungen der Lagermitten von 27 bis 29 und von 21 bis 12a sind gleich lang. Die Strecken der Lagermitten von 15 bis 25a und von 21 bis 25 sind gleich lang und zueinander parallel. Die Strecken der Lagermitten von 21 bis 27 und von 12a bis 29 sind gleich lang und zueinander parallel. Die Konsole 26 ist bei 21 gelagert. Der Ausgleichszylinder 31 ist an einem Ende bei 32 an dem Halteteil 6 gelagert, das andere Ende an dem Holm 8a bei 33.

Entsprechend dem Pantographenprinzip bewegen sich die Lagermitte der Rolle 5a und der Punkt 12, 12a am Ende des Lastarms 11 immer in derselben Richtung, wobei sich die zurückgelegten Wege wie "i" verhalten. Durch Zuführen oder Ablassen von Druckmittel in oder aus dem Hubzylinder 17 wird die Fahrbahn 5 mit der Rolle 5a in Pfeilrichtung 1 nach oben oder nach unten bewegt und damit auch der Punkt 12, 12a mit den Teilen, die mit Punkt 12, 12a verbunden sind. Durch die Geräteführung 16 wird die Fahrbahn 5 bei jeder Bewegung parallel geführt. Der Manipulator ist in seiner Befestigung so ausgerichtet, daß der Teil des Ständers 14, an dem die Rollen 16a laufen, senkrecht steht, und die Geräteführung ist so eingestellt, daß die Fahrbahn 5 in jeder Stellung in der Waagerechten liegt. Dadurch wird bei einer Bewegung in Pfeilrichtung 2 für die Rolle 5a und den Punkt 12, 12a mit den damit verbundenen Teilen die geodätische Höhe nicht verändert und damit keine Kraft benötigt außer zur Überwindung der Reibung und der Massenträgheit der bewegten Teile. Bei einer Ausführung mit nur einer Fahrbahn 5 ist diese Reibung geringer als bei den üblichen Ausführungen mit zwei Fahrbahnen, die als Doppelpassung Verwindungen hervorrufen und sehr präzis gefertigt und montiert werden müssen. Durch Anordnung des Hubzylinders 17 unter der Fahrbahn 5, so daß der Zylinderabstützpunkt zur Fahrbahn zwischen den beiden Endlagen der Rolle 5a liegt, werden die Kräfte, die auf die Geräteführung 16 wirken, verringert, was eine genaue Parallelführung der Fahrbahn 5 ermöglicht. Diese vorteilhafte Anordnung der Fahrbahn 5 und des Hubzylinders 17 schränkt den Arbeitsraum des Manipulators zur Mitte ein, was durch die Anordnung des Parallelholms auf der anderen Seite des Holmes 8 als die Rolle 5a wieder aufgehoben wird. Der Abstand des Endes des Lastarmes 11 von der Mittenachse des Lagers 19 ist in Figur 2 mit "Ri" bezeichnet. Durch die vorgeschlagene Anordnung des Parallelholmes 9 wird Ri klein und damit die Reichweite nach innen groß.

Mit dem Gewicht 13 wird die Wirkung des Gewichtes der Holme und, wenn vorhanden, des Gewichtes der Parallelführung ausgeglichen, so daß die Rolle 5a in jeder Stellung auf der Fahrbahn 5 stehenbleibt. Die Reichweite und die Tragkraft dieser Manipulatoren hängt von der Länge der Holme ab. Bei einer Umstellung des Manipulators haben die Holme andere Längen und damit andere Gewichte. Durch Verschieben des Gewichtes 13 in Richtung 13a kann die Wirkung des Gewichtes der neuen Holme ausgeglichen werden. Bei der Fertigung der Manipulatoren wird eine geringere Anzahl unterschiedlicher Gewichte gebraucht. Unter Umständen kommt man mit einem Gewichtsstück aus, wobei die Toleranz der/des Gewichtes sehr groß sein darf.

In der Figur 2 erfolgt der Ausgleich der Wirkung des Gewichtes der Holme und, wenn vorhanden, des Gewichtes der Parallelführung durch den Ausgleichszylinder 31, der mit einem Druckmittel beaufschlagt ist. Der Ausgleichszylinder 31 ist einerseits mit dem Halteteil 6 und andererseits mit dem Holm 8a verbunden. Die Parallelführung 24, 26, 28 bewirkt, daß die Verbindung der Lagermitten 12a mit 29 ihren Winkel zu dem Ständer 14 im Raum nicht ändert. Die mit 12a und 29 verbundene Verlängerung 30 gestattet ein Unterfahren, z. B. in ein Regal. An der Verlängerung 30 kann beispielsweise ein Lasthaken befestigt sein. Auch kann mit den Lagermitten 12a und 29 z. B. ein Steuerkopf oder eine Drehverbindung oder ein Greifmittel verbunden sein. Durch Lösen der lösbaren Befestigung können der Ständer 14 und das Halteteil 6 voneinander getrennt werden. Die oben beschriebenen Anordnungen der Holme und, jeweils wenn vorhanden, der Parallelführung und/oder des Ausgleichszylinders erlauben diese Trennung ohne zusätzliche Demontage. Genauso erlauben sie eine einfache Montage.

Da der Holm 8 am Halteteil 6 mit dem Lager 15 so gelagert ist, daß er nur die Drehbewegung in Pfeilrichtung 4 ausführen kann, ist es möglich, mit dem Manipulator Lasten zu bewegen, deren Schwerpunkt außerhalb der Ebene liegt, in der sich die Holme bewegen, womit der Manipulator seitensteif ist.

Durch Kombinieren der vorgeschlagenen Merkmale erhält man einen einfachen kostengünstigen Manipulator. Die Lagerung des Holmes 8 und, wenn jeweils vorhanden, der Parallelführung und des Ausgleichszylinders 31 ermöglichen eine einfache Montage, die der Anwender selbst vornehmen kann. Dadurch läßt sich der Manipulator, in zwei Teile zerlegt, auf einfache Art zum Anwender transportieren. Der Anwender kann selbst leicht einen Wechsel der Tragkraft vornehmen. Ferner gibt diese Anordnung dem Manipulator Seitensteifigkeit. Durch die Anwendung nur einer Fahrbahn 5 für die waagerechte Bewegung wird diese Bewegung leichtgängig und die Toleranzen groß und damit die Kosten für die Fertigung und die Montage günstig. Durch die Anordnung des Hubzylinders 17 unter der Fahrbahn 5 werden die auf die Geräteführung 16 wirkenden Kräfte gering und ermöglichen eine präzise Parallelbewegung der Fahrbahn 5. Die Anordnung des Parallelholms 9 zur Rolle 5a vergrößert den Raum, in dem eine Last bewegt und gehalten werden kann. Durch die Verschiebbarkeit des Gewichtes 13 werden die Teilevielfalt des Gewichtes und damit die Kosten reduziert.

In der Zeichnung nicht dargestellt sind übliche Antriebe sowie Steuerungen und/oder Regelungen, die für den Betrieb des Manipulators verwendet werden können. Dazu gehört beispielsweise ein Drehantrieb für den Ständer 14 und ein Stellantrieb für den Lenkhebel 10.

## Bezugszeichenliste

| 1 | Pfeil |
|---|---|
| 2 | Pfeil |
| 3 | Pfeil |
| 4 | Pfeil |
| 5 | Fahrbahn |
| 5a | Rolle |
| 6 | Halteteil |
| 8 | Holm |
| 8a | Holm |
| 9 | Parallelholm |
| 10 | Lenkhebel |
| 11 | Lastarm |
| 12 | Punkt |
| 12a | Punkt |
| 12b | Lasthaken |
| 13 | Gewicht |
| 13a | Pfeil |
| 14 | Ständer |
| 15 | Lagerung |
| 16 | Geräteführung |
| 16a | Rollen |
| 17 | Hubzylinder |
| 18 | Säule |
| 19 | Lagerung |
| 20 | Lagerstelle |
| 21 | Lagerstelle |
| 22 | Lagerstelle |
| 23 | Lagerstelle |
| 24 | Stange |
| 25 | Lagerstelle |
| 26 | Konsole |
| 27 | Lagerstelle |
| 28 | Stange |
| 29 | Lagerstelle |
| 30 | Lastaufnahmemittel |
| 31 | Ausgleichszylinder |
| 32 | Lagerstelle |
| 33 | Lagerstelle |

## Patentansprüche

1. Manipulator nach dem Pantographenprinzip, mit zwei zueinander parallelen Holmen (8, 8a; 9) sowie einem Lastarm (11) und einem dazu parallelen Lenkhebel (10), die gelenkig zu einem Parallelogrammgestänge zusammengeschlossen sind, wobei ein Holm (8, 8a) schwenkbar an einem Halteteil (6) eines um eine vertikale Achse drehbaren Ständers (14) gelagert ist und mindestens ein Hubzylinder (17) mit einer durch ihn verstellbaren Fahrbahn (5) verbunden ist, auf der das Parallelogrammgestänge mit einer Rolle (5a) abgestützt ist, dadurch gekennzeichnet, daß das Halteteil (6) lösbar am Ständer (14) angeordnet ist und daß die nur von oben auf der verstellbaren Fahrbahn (5) abgestützte Rolle (5a) am Lenkhebel (10) des Parallelogrammgestänges drehbar gelagert ist.

2. Manipulator nach Anspruch 1, dadurch gekennzeichnet, daß das Halteteil (6) bzw. die Lagerung (15) für den Holm (8) im Abstand über der von der Fahrbahn (5) gebildeten Ebene angeordnet ist und daß der Lenkhebel (10) sich über den Holm (8) hinaus erstreckt sowie an seinem freien Ende die Rolle (5a) trägt.

3. Manipulator nach Anspruch 1 oder 2, dadurch gekennzeichnet, daß der Lenkhebel (10) an seinem der Fahrbahn (5) abgewandten Ende eine Lagerstelle (22) für den anderen Holm (9) sowie zwischen dieser Lagerstelle (22) und der Rolle (5a) eine Lagerstelle (20) für den am Halteteil (6) gelagerten Holm (8) aufweist.

4. Manipulator nach einem der Ansprüche 1 bis 3, dadurch gekennzeichnet, daß die horizontal ausgerichtete Fahrbahn (5) an eine vertikal in Verstellrichtung (1) des Hubzylinders (17) am Ständer (14) verschiebliche Geräteführung (16) angeschlossen ist.

5. Manipulator nach einem der Ansprüche 1 bis 4, dadurch gekennzeichnet, daß das Verhältnis (i) des Abstands zwischen der Lagerstelle (15) des Holms (8) am Halteteil (6) und der Lagerstelle (20) des Holms (8) am Lenkhebel (10) zum Abstand zwischen der Lagerstelle (15) des Holms (8) am Halteteil (6) der Lagerstelle (21) des Holms (8) am Lastarm (11) gleich ist dem Verhältnis (i) des Abstands zwischen der Lagerstelle (20) des Holms (8) am Lenkhebel (10) und der Rolle (5a) am Lenkhebel (10) zum Abstand zwischen der Lagerstelle (21) des Holms (8) am Lastarm (11) und dem Anschlußpunkt (12, 12a) der Last am Lastarm (11).

6. Manipulator nach einem der Ansprüche 1 bis 5, gekennzeichnet durch einen an dem am Halteteil (6) gelagerten Holm (8) angreifenden Gewichtsausgleich.

7. Manipulator nach Anspruch 6, dadurch gekennzeichnet, daß der Holm (8) über das Halteteil (6) hinaus verlängert ist und an seiner Verlängerung ein Ausgleichsgewicht (13) trägt.

8. Manipulator nach Anspruch 7, dadurch gekennzeichnet, daß das Ausgleichsgewicht (13) in Längsrichtung (13a) des Holms (8) verstellbar ist.

9. Manipulator nach Anspruch 6, gekennzeichnet durch einen zwischen Holm (8) und Ständer (14) wirkenden Ausgleichszylinder (31).

10. Manipulator nach einem der Ansprüche 1 bis 9, gekennzeichnet durch eine Parallelführung für ein an den Lastarm (11) angeschlossenes Lastaufnahmemittel (30) aus einer zum Holm (8, 8a) parallelen Stange (24), die einerseits am Halteteil (6) und andererseits an einer die Lagerstelle (21) des Holms (8) aufnehmenden Konsole (26) gelagert ist, und aus einer zum Lastarm (11) parallelen Stange (28), die einerseits an der Konsole (26) und andererseits am Lastaufnahmemittel (30) gelagert ist.

11. Manipulator nach einem der Ansprüche 1 bis 10, dadurch gekennzeichnet, daß der Hubzylinder (17) unterhalb der Fahrbahn (5) angeordnet ist und sein Abstützpunkt an der Fahrbahn (5) zwischen den beiden Endlagen der Rolle (5a) liegt.

**Claims**

1. Manipulator using the pantograph principle, with two longitudinal members (8, 8a; 9) parallel to one another, also with a load arm (11) and a link lever (10) parallel thereto, these being connected together pivotally to form a parallelogram linkage, a longitudinal member (8, 8a) being pivotably mounted on a supporting part (6) of a stand (14), the latter being rotatable about a vertical axis, and at least one actuator (17) being connected to a track (5) adjustable by said actuator, the parallelogram linkage being supported with a roller (5a) on the said tracks characterised in that the supporting part (6) is arranged releasably on the stand (14), and that the roller (5a), bearing only from above on the adjustable track (5), is mounted rotatably on the link lever (10) of the parallelogram linkage.

2. Manipulator according to claim 1, characterised in that the supporting part (6) or the bearing arrangement (15) for the longitudinal member (8) is arranged above the plane formed by the track (5) and spaced relatively thereto, and that the link lever (10) extends beyond the longitudinal member (8) and carries at its free end the roller (5a).

3. Manipulator according to claim 1 or 2, characterised in that the link lever (10) comprises, at its end remote from the track (5), a bearing point (22) for the other longitudinal member (9) and also, between this bearing point (22) and the roller (5a), a bearing point (20) for the longitudinal member (8) mounted on the supporting member (8).

4. Manipulator according to one of claims 1 to 3, characterised in that the horizontally aligned track (5) is connected to an apparatus guide arrangement (16), the latter being displaceable vertically in the adjusting direction of the actuator (17) on the stand (14).

5. Manipulator according to one of claims 1 to 4, characterised in that the ratio (i) of the spacing between the bearing point (15) of the longitudinal member (8) on the supporting part (6) and the bearing point (20) of the longitudinal member (8) on the link lever (10) to the spacing between the bearing point (15) of the longitudinal member (8) on the supporting part (6) and the bearing point (21) of the longitudinal member (8) on the load arm (11) is equal to the ratio (i) of the spacing between the bearing point (20) of the longitudinal member (8) on the link lever (10) and the roller (5a) on the link lever (10) to the spacing between the bearing point (21) of the longitudinal member (21) on the load arm (11) and the point (12, 12a) of attachment of the load on the load arm (11).

6. Manipulator according to one of claims 1 to 5, characterised by a weight compensation arrangement acting on the longitudinal member (8) which is mounted on the supporting part (6).

7. Manipulator according to claim 6, characterised in that the longitudinal member (8) is prolonged beyond the supporting part (6) and carries at its prolongation a compensation weight (13).

8. Manipulator according to claim 7, characterised in that the compensation weight (13) is adjustable in the longitudinal direction (13a) of the longitudinal member (8).

9. Manipulator according to claim 6, characterised by a compensation cylinder (31) acting between longitudinal member (8) and stand (14).

10. Manipulator according to one of claims 1 to 9, characterised by a parallel guide arrangement for a load takeup means (30) connected to the load arm (11), comprising a rod (24) which is parallel to the longitudinal member (8, 8a) and which is mounted on the one hand on the supporting part (6) and on the other hand on a bracket (26) accommodating the bearing point (21) of the longitudinal member (21), and also a rod (28) which is parallel to the load arm (11) and which is mounted on the one hand on the bracket (26) and on the other hand on the load takeup means (30).

11. Manipulator according to one of claims 1 to 10, characterised in that the actuator (17) is arranged below the track (5), and its bearing point on the track (5) is situated between the two end positions of the roller (5a).

## Revendications

1. Manipulateur selon le principe du pantographe, comportant deux longerons (8, 8a; 9) parallèles entre eux ainsi qu'un bras de charge (11) et un levier directeur (10) parallèle à celui-ci, qui sont reliés ensemble de façon articulée sous la forme d'une tringlerie en parallélogramme, un longeron (8, 8a) étant monté pivotant sur une partie de retenue (6) d'un montant (14) pouvant tourner autour d'un axe vertical et au moins un cylindre de manoeuvre (17) étant relié à une voie (5) déplaçable par lui et sur laquelle est soutenue la tringlerie en parallélogramme à l'aide d'un rouleau (5a), caractérisé en ce que la partie de retenue (6) est disposée de façon séparable sur le montant (14) et en ce que le rouleau (5a), soutenu seulement par le haut sur la voie mobile (5), est monté tournant sur le levier directeur (10) de la tringlerie en parallélogramme.

2. Manipulateur selon la revendication 1, caractérisé en ce que la partie de retenue (6) ou le support (15) pour le longeron (8) est disposée à distance au-dessus du plan formé par la voie de déplacement (5) et en ce que le levier directeur (10) s'étend au-dessus du longeron (8) et porte le rouleau (5a) à son extrémité libre.

3. Manipulateur selon une des revendications 1 ou 2, caractérisé en ce que le levier directeur (10) comporte, à son extrémité opposée à la voie de déplacement (5), un palier (22) pour l'autre longeron (9) et également, entre ce palier (22) et le rouleau (5a), un palier (20) pour le longeron (8) monté sur la partie de retenue (6).

4. Manipulateur selon une des revendications 1 à 3, caractérisé en ce que la voie de déplacement (5), orientée horizontalement, est reliée à un guide d'appareillage (16), mobile sur le montant (14) verticalement dans la direction d'actionnement (1) du cylindre de manoeuvre (17).

5. Manipulateur selon une des revendications 1 à 4, caractérisé en ce que le rapport (1) de l'espacement entre le palier (15) du longeron (8) sur la partie de retenue (6) et le palier (20) du longeron (8) sur le levier directeur (10) à l'espacement entre le palier (15) du longeron (8) sur la partie de retenue (6) et le palier (21) du longeron (8) sur le bras de charge (11) est égal au rapport (i) de l'espacement entre le palier (20) du longeron (8) sur le levier directeur (10) et le rouleau (5a) sur le levier directeur (10) à l'espacement entre le palier (21) du longeron (8) sur le bras de charge (11) et le point de liaison (12, 12a) de la charge au bras de charge (11).

6. Manipulateur selon une des revendications 1 à 5, caractérisé par un système d'équilibrage de poids s'accrochant sur le longeron (8) monté sur la partie de retenue (6).

7. Manipulateur selon la revendication 6, caractérisé en ce que le longeron (8) est prolongé au-dessus de la partie de retenue (6) et porte sur son prolongement un poids d'équilibrage (13).

8. Manipulateur selon la revendication 7, caractérisé en ce que le poids d'équilibrage (13) est déplaçable dans la direction longitudinale (13a) du longeron (8).

9. Manipulateur selon la revendication 6, caractérisé par un vérin d'équilibrage (31) agissant entre le longeron (8) et le montant (14).

10. Manipulateur selon une des revendications 1 à 9, caractérisé par un guide parallèle pour un moyen de réception de charge (30) relié au bras de charge (11), se composant d'une barre (24) parallèle au longeron (8, 8a) et qui montée d'un côté sur la partie de retenue (6) et de l'autre côté sur une console (26) recevant le palier (21) du longeron (8), et d'une barre (28) parallèle au bras de charge (11) et qui est montée d'un côté sur la console (26) et de l'autre côté sur le moyen de réception de charge (30).

11. Manipulateur selon une des revendications 1 à 10, caractérisé en ce que le cylindre de manoeuvre (17) est disposé en dessous de la voie de déplacement (5) et son point d'appui sur la voie (5) est situé entre les deux positions limites du rouleau (5a).

FIG. 1

FIG. 2

1

FIG. 3